# FASCICULE DE BREVET EUROPEEN

(11) **EP 1 740 321 B1**
(45) Date de publication et mention de la délivrance du brevet: **31.03.2010**
(21) Numéro de dépôt: 05753729.2
(22) Date de dépôt: 08.04.2005
(51) Int. Cl.: A23N 15/02, B07B 7/08, B03B 5/32

(54) **DISPOSITIF DE SEPARATION D"OBJETS**
VORRICHTUNG ZUM VEREINZELN VON OBJEKTEN
OBJECT SEPARATION DEVICE

(30) Priorité: 23.04.2004 FR 0404354
(43) Date de publication de la demande: 10.01.2007
(73) Titulaire: Fachaux, Jean, F-18110 Saint-Martin D'Auxigny (FR)
(72) Inventeur: Fachaux, Jean, F-18110 Saint-Martin D'Auxigny (FR)
(74) Mandataire: Maillet, Alain
(86) Numéro de dépôt international: PCT/FR2005/000856
(87) Numéro de publication internationale: WO 2005/110628

(56) Documents cités:
- FR-A- 2 820 287
- FR-A- 2 842 396
- US-A- 1 393 287
- US-A- 3 354 923

## Description

L'invention concerne un dispositif de séparation d'objets initialement reliés entre eux. L'invention concerne aussi un procédé de séparation d'objets initialement reliés entre eux à l'aide d'un tel dispositif.

Elle trouve application dans le domaine du traitement des fruits, en particulier dans la séparation des cerises en grappes.

La demande de brevet FR-A-2 820 287 décrit un dispositif de séparation de cerises en grappes à leur point de jonction. Ce dispositif comprend un bac rempli d'eau dans lequel sont déversées les cerises à séparer. Une première canalisation est placée à la base du bac et relie le bac à l'entrée d'une pompe hydraulique centrifuge à roue, une deuxième canalisation placée en sortie de la pompe redirige les cerises et l'eau vers un une grille de réception. La' séparation des cerises s'effectue grâce à un brassage hydraulique qui est créé à l'intérieur de la pompe.

Le brassage hydraulique ne donne pas entière satisfaction, en particulier lorsque les cerises sont fortement liées les unes aux autres. La mise en place d'un seul moyen d'introduction dans le bac entraîne la génération de remous dans ce dernier. Ces remous sont susceptibles d'abîmer les cerises.

Le brevet US-A-1,393,287 décrit un dispositif de séparation pour raisins en grappe comprenant une canalisation dans lequel est généré un mouvement circulaire rapide. Ce mouvement est généré dans un flux d'air et du fait que l'air est un milieu compressible, les fruits viennent en contact avec les parois de la canalisation au risque d'être choqués et abîmés. L'utilisation de ce dispositif n'est donc pas possible pour les fruits qui ne doivent pas être choqués sous peine de voir leur aspect se dégrader.

Un objet de la présente invention est de proposer un dispositif de séparation d'objets initialement reliés entre eux qui ne présente pas les inconvénients de l'art antérieur.

A cet effet, est proposé un dispositif de séparation d'objets initialement reliés entre eux comme défini dans la revendication 1.

Ce mode de réalisation est particulièrement avantageux car il permet une séparation facile des objets initialement reliés entre eux grâce au fait que les tourbillons créent des forces centrifuges qui tendent à séparer les objets sans que les fruits puissent s'abîmer contre les parois de la canalisation.

Le dispositif comprend un bac et deux canalisations, chacune étant reliée par des moyens d'introduction au bac, les moyens de génération étant en outre aptes à générer au moins un tourbillon d'eau dans chaque canalisation.

La mise en place de deux canalisations dans un bac contribue à stabiliser le contenu du bac lors de la génération du tourbillon dans la canalisation.

Selon un premier mode de réalisation, les moyens de génération et les moyens d'introduction sont disposés à l'une des extrémités de la canalisation, et le tourbillon généré est adapté à expulser les objets vers la deuxième extrémité de la canalisation.

Selon un deuxième mode de réalisation, les moyens de génération sont disposés à une première extrémité de la canalisation et les moyens d'introduction sont disposés à une deuxième extrémité de la canalisation, et le tourbillon généré est adapté à aspirer les objets vers la première extrémité de la canalisation.

Avantageusement les moyens de génération comprennent au moins une pompe.

La pompe peut être une pompe à roue mono-canal, multi-canal ou à vortex.

L'axe du tourbillon est sensiblement confondu avec l'axe de la canalisation pour permettre le déplacement des objets dans la canalisation sans que ceux-ci ne viennent heurter les parois de la canalisation.

Avantageusement, la surface intérieure de la canalisation lisse.

Avantageusement, le diamètre de la canalisation est au moins supérieur à une distance maximale qui sépare deux objets lorsque ces objets sont encore reliés entre eux.

Cette caractéristique évite que les objets encore reliés entre eux viennent heurter la paroi de la canalisation lors de la mise en rotation par le tourbillon.

L'invention facilite un procédé de séparation d'objets initialement reliés entre eux, **caractérisé en ce qu**'il comprend:
- une étape de génération d'un tourbillon d'eau dans une canalisation par des moyens de génération; et
- une étape d'introduction desdits objets dans ladite canalisation.

Un tel procédé permet une séparation des objets initialement reliés entre eux grâce aux forces centrifuges créées par les tourbillons.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels:
la Fig. 1 représente une vue schématique d'un dispositif de séparation de cerises en grappes selon l'invention;
la Fig. 2 représente un agrandissement de la coupe selon la ligne II-II de la Fig. 1.

La description qui suit sera faite à partir d'un dispositif de séparation de cerises en grappes, mais elle peut s'appliquer à la séparation de tout ensemble d'objets initialement reliés entre eux.

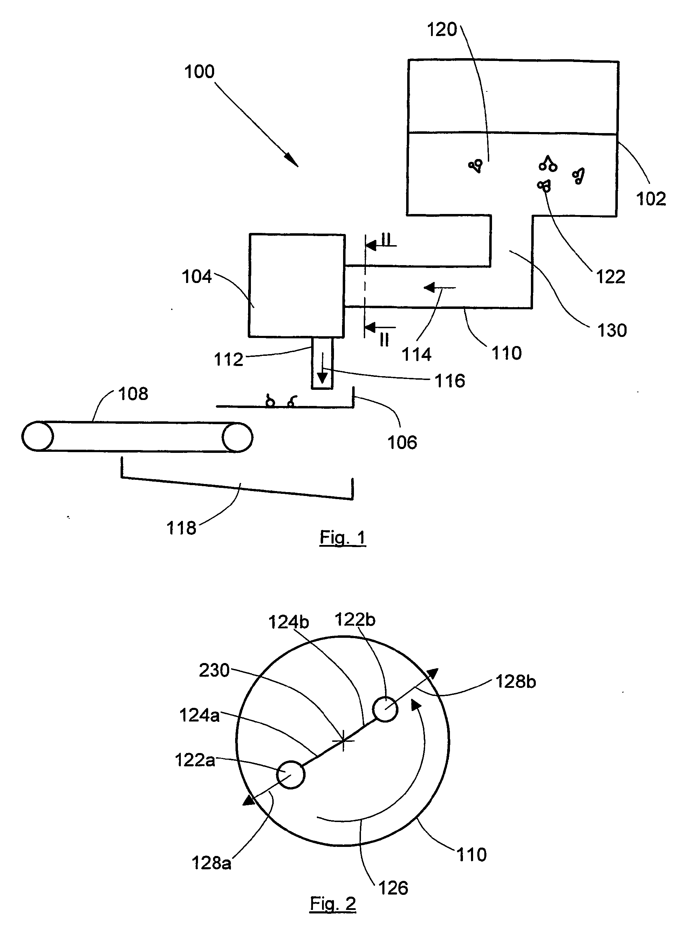

La Fig. 1 représente un dispositif de séparation 100 de cerises en grappes 122 qui comprend un bac 102, des moyens de génération 104 d'au moins un tourbillon et un plateau de réception 106. Les moyens de génération 104 sont reliés d'une part au bac 102 par une première canalisation 110 et d'autre part au plateau de réception 106 par une deuxième canalisation 112. Plus précisément, la première canalisation 110 est reliée par des moyens d'introduction 130 au bac 102 et à l'entrée des moyens de génération 104, tandis que la deuxième canalisation 112 relie la sortie des moyens de génération 104 au plateau de réception 106. Les moyens d'introduction 130 sont ici constitués du siphon du bac 102, mais ils peuvent être constitué par un orifice réalisé dans le bac 102 qui est en prise directe avec la canalisation 110.

Le bac 102 est rempli d'un fluide neutre 120 qui n'agit pas sur les cerises, comme par exemple de l'eau et sert de zone de stockage aux cerises en grappes 122 qui sont déposées dans le fluide neutre 120. Lorsque les moyens de génération 104 sont activés, le fluide neutre 120 et les cerises en grappes 122 sont introduits dans la première canalisation 110 par les moyens d'introduction 130 et sont entraînés selon la direction de la flèche 114 jusqu'aux moyens de génération 104, puis sont expulsés par la deuxième canalisation 112 selon la direction de la flèche 116 jusqu'au plateau de réception 106. La quantité de fluide neutre 120 à l'intérieur du bac 102 doit être suffisant pour éviter que le bac 102 se vide lorsque le générateur de tourbillon 104 est activé.

Lorsque le fluide neutre 120 est de l'eau, les cerises en grappes 122 ne viennent pas heurter les parois de la canalisation 110 évitant ainsi que les cerises soient abîmées. En effet, l'eau est un fluide incompressible qui génère une couche limite au voisinage des parois de la canalisation 110 et cette couche limite évite aux cerises de venir en contact avec les parois de la canalisation 110. Les fruits et en particulier les cerises en grappes 122 ne viennent donc pas en contact avec les parois de la canalisation 110, contrairement à ce qui est décrit dans l'état de la technique, évitant ainsi qu'ils soient choqués et abîmés contre les parois de la canalisation 110.

Le fluide neutre 120 qui est expulsé sur le plateau de réception 106 s'écoule dans la goulotte 118. Le fluide neutre 120 peut être alors ramené dans le bac 102 par exemple grâce à un dispositif de pompage annexe, permettant ainsi un fonctionnement en circuit fermé qui économise le fluide neutre 120.

Les cerises séparées qui sont expulsées sur le plateau de réception 106 sont ensuite entraînées par un convoyeur à bande 108 qui les dirige vers d'autres étapes de traitement comme par exemple un calibrage et un empaquetage.

La goulotte 118 peut aussi servir à rediriger vers le bac 102 des cerises qui tomberaient du convoyeur 108.

Les moyens de génération 104 peuvent être constitués de tout type de générateur de tourbillon comme par exemple une pompe hydraulique et comprendre un moteur entraînant en rotation une roue qui génère, à l'intérieur de la première canalisation 110, un tourbillon dont l'axe de rotation est sensiblement confondu avec l'axe de la première canalisation 110 pour éviter que les cerises viennent heurter la paroi de la canalisation 110. La roue qui génère le tourbillon peut être du type mono-canal, multi-canal, à vortex ou de tout autre type adapté à générer un tourbillon dans la première canalisation 110.

Le fluide neutre 120 est alors aspiré sous forme d'un tourbillon à l'intérieur de la première canalisation 110, les cerises en grappes 122 subissent alors des forces centrifuges qui tendent à écarter les cerises en grappes 122 les unes des autres.

La Fig. 2 représente une grappe de deux cerises 122a, 122b reliées par leurs pédoncules 124a, 124b en un point de jonction 230. Lorsque les cerises en grappes 122a, 122b pénètrent dans la première canalisation 110, le tourbillon, représenté par la flèche 126, fait tourner les cerises en grappes 122a, 122b, sensiblement autour de l'axe central de la canalisation 110. Les cerises 122a, 122b sont alors soumises à des forces centrifuges opposées 128a, 128b qui tendent à séparer l'une de l'autre les cerises 122a, 122b au niveau d'un point de jonction 230.

L'utilisation d'un tourbillon pour séparer les cerises 122a, 122b améliore l'étape de séparation des cerises: d'une part, aucune pièce coupante risquant d'endommager les cerises n'est utilisée et, d'autre part, les forces centrifuges 128a, 128b exercent des efforts dont les efforts sont d'autant plus importants qu'ils sont localisés au niveau du point de jonction 230, permettant ainsi une séparation plus facile des cerises 122a, 122b liées entre elles.

Pour éviter que les cerises 122a, 122b viennent heurter les parois de la première canalisation 110, le diamètre de celle-ci sera suffisant pour permettre le passage de cerises en grappes lorsqu'elles sont déployées, c'est-à-dire lorsque les forces centrifuges 128a, 128b agissent sur les cerises en grappes 122a, 122b avant leur séparation et tendent à les écarter les unes des autres. Le diamètre de la canalisation 110 est alors au moins supérieur à une distance maximale qui sépare deux cerises 122 lorsque ces cerises sont encore reliées entre elles. Mais le diamètre de la première canalisation 110 ne doit pas être trop important pour que le tourbillon puisse être généré. En effet, si le diamètre est trop important, la masse de fluide neutre 120 à mettre en mouvement sera d'autant plus importante, le générateur de tourbillon 104 devra alors être dimensionné en conséquence et la vitesse de rotation sera plus importante au risque d'abîmer les cerises lors de leur passage dans le générateur de tourbillon 104.

Le diamètre minimum de la première canalisation 110 pourra être de l'ordre de 60 mm.

La longueur de la première canalisation 110 doit être suffisante pour permettre la génération d'un tourbillon, en effet si la canalisation est trop courte, le tourbillon n'aura pas le temps de se former ou les cerises en grappes 122a, 122b ne seront pas soumises suffisamment longtemps aux forces centrifuges 128a, 128b pour permettre leur séparation. Mais, comme pour le diamètre, la longueur de la première canalisation 110 ne doit pas être trop importante pour éviter que la masse de fluide neutre 120 à mettre en mouvement soit trop importante.

La longueur de la première canalisation 110 pourra être de l'ordre de 1 m.

L'intérieur de la première canalisation 110 sera avantageusement lisse et sans aspérité pour éviter que les cerises s'abîment lors de chocs contre la paroi de la première canalisation 110.

Le procédé de séparation des cerises en grappes 122 préalablement acheminé dans cet exemple dans un bac 102, comprend:
- une étape de génération d'un tourbillon dans la première canalisation 110 remplie du fluide neutre 120 par les moyens de génération 104 et
- une étape d'introduction dans la première canalisation 110 des cerises 122 contenues dans le bac 102, laquelle est dans cet exemple réalisée par aspiration dans le siphon 130.

L'introduction des cerises 122 dans le tourbillon permet une séparation des cerises par effet d'une force centrifuge appliquée auxdites cerises par le tourbillon.

Les cerises sont ensuite éjectées par une deuxième canalisation 112.

Les moyens de génération 104 sont placés entre la première canalisation 110 et la deuxième canalisation 112, le tourbillon est alors créé par aspiration du fluide neutre 120 remplissant la première canalisation 110, comme cela est représenté sur la Fig. 1.

En d'autres termes, dans le mode de réalisation représenté ici, les moyens de génération 104 sont disposés à une première extrémité de la première canalisation 110 et les moyens d'introduction 130 sont disposés à une deuxième extrémité de la première canalisation 110, le tourbillon généré aspire alors les cerises 122 vers la première extrémité de la canalisation 110.

Bien entendu, la présente invention n'est pas limitée aux exemples et modes de réalisation décrits et représentés, mais elle est susceptible de nombreuses variantes accessibles à l'homme de l'art.

Dans un autre mode de mise en oeuvre de l'invention, non représenté sur les Figs., le bac 102 n'existe pas et la canalisation 110 est alors directement alimentée en objets 122 à séparer par un orifice réalisé dans la canalisation 110 et qui fait office de moyens d'introduction 130.

Dans un autre mode de mise en oeuvre de l'invention, non représenté sur les Figs., les moyens de génération 104 pourront par exemple être placés entre le bac 102 et la première canalisation 110, le tourbillon étant alors créé par expulsion du fluide neutre 120 remplissant la première canalisation 110. Les moyens de génération 104 ne se trouveront alors plus entre la première canalisation 110 et la deuxième canalisation 112, mais au niveau de la jonction entre le bac 102 et la première canalisation 110.

Lorsque de tels moyens de génération 104 seront activés, le fluide neutre 120 et les cerises en grappes 122 seront aspirés hors du bac 102 dans les moyens de génération 104, puis expulsés de la première canalisation 110 selon la direction de la flèche 114 jusqu'à la deuxième canalisation 112, destinée à acheminer les cerises séparées jusqu'au plateau de réception 106.

En d'autres termes, les moyens de génération 104 et les moyens d'introduction 130 seront alors disposés à l'une des extrémités de la première canalisation 110, le tourbillon étant destiné à expulser les cerises 122 vers la deuxième extrémité de la canalisation 110.

En fonctionnement, lors de la génération du tourbillon à l'intérieur de la canalisation 110, le bac 102 se vide dans la canalisation 110 au travers du siphon 130, ce qui génère un tourbillon à l'intérieur du bac 102. Ce tourbillon peut créer à l'intérieur du bac 102 des remous susceptibles d'abîmer les cerises. La mise en place d'un autre siphon, sous la forme d'une autre canalisation 110 destinée à être également le siège d'un tourbillon généré par les moyens de génération 104 contribuera à stabiliser le fluide neutre dans le bac 102 et, évitera ainsi que les cerises s'abîment.

A cet effet, les moyens de génération 104 pourront inclure deux pompes jumelles, reliées chacune par l'intermédiaire d'une canalisation 110 au bac 102.

D'une manière générale, une pluralité de canalisations 110 pourra être mise en place au niveau du bac 102, chacune de ces canalisations sera alors le siège d'un tourbillon généré par une pluralité de pompes.

Le bac 102 pourra aussi être muni d'une pluralité de siphons 130 se réunissant afin de venir se connecter à une canalisation 110 siège d'un tourbillon généré par des moyens de générations 104.

## Revendications

1. Dispositif de séparation (100) d'objets (122) initialement reliés entre eux, **caractérisé en ce qu'**il comprend un bac (102), au moins deux moyens d'introduction (130), chacun débouchant dans une canalisation (110), et des moyens de génération (104) aptes à générer au moins un tourbillon d'eau dans chaque canalisation (110).

2. Dispositif selon la revendication 1, **caractérisé en ce que** les moyens d'introduction (130) se réunissent pour déboucher dans la même canalisation (110).

3. Dispositif selon l'une des revendications 1 ou 2, **caractérisé en ce que** les moyens de génération (104) et les moyens d'introduction (130) sont disposés à l'une des extrémités de la canalisation (110), et **en ce que** le tourbillon généré est adapté à expulser les objets (122) vers la deuxième extrémité de la canalisation (110).

4. Dispositif selon l'une des revendications 1 ou 2, **caractérisé en ce que** les moyens de génération (104) sont disposés à une première extrémité de la canalisation (110) et les moyens d'introduction (130) sont disposés à une deuxième extrémité de la canalisation (110), et **en ce que** le tourbillon généré est adapté à aspirer les objets (122) vers la première extrémité de la canalisation (110).

5. Dispositif selon l'une des revendications précédentes, **caractérisé en ce que** les moyens de génération (104) comprennent au moins une pompe.

6. Dispositif selon la revendication 4, **caractérisé en ce que** la pompe (104) est une pompe à roue mono-canal, multi-canal ou à vortex.

7. Dispositif de séparation (100) selon l'une des revendications 1 à 5, **caractérisé en ce que** l'axe du tourbillon est sensiblement confondu avec l'axe de la canalisation (110).

8. Dispositif de séparation (100) selon l'une des revendications 1 à 6, **caractérisé en ce que** la surface intérieure de la canalisation (110) est lisse.

9. Dispositif de séparation (100) selon l'une des revendications 4 à 9, **caractérisé en ce que** le diamètre de la canalisation (110) est au moins supérieur à une distance maximale qui sépare deux objets (122) lorsque ces objets sont encore reliés entre eux.

## Claims

1. Device (100) for separating objects (122) initially connected together, **characterised in that** it comprises a tank (102), at least two means for introducing (130), each opening into a pipe (110) and means for generating (104) capable of generating at least one water vortex in each pipe (110).

2. Device according to claim 1, **characterised in that** the means for introducing (130) are joined together to open into the same pipe (110).

3. Device according to one of claims 1 or 2, **characterised in that** the means for generating (104) and the means for introducing (130) are arranged at one of the ends of the pipe (110) and **in that** the vortex generated is arranged to expel the objects (122) towards the second end of the pipe (110).

4. Device according to one of claims 1 or 2, **characterised in that** the means for generating (104) are arranged at a first end of the pipe (110) and the means for introducing (130) are arranged at a second end of the pipe (110) and **in that** the vortex generated is arranged to suck the objects (122) towards the first end of the pipe (110).

5. Device according to one of the preceding claims, **characterised in that** the means for generating (104) comprise at least one pump.

6. Device according to claim 4, **characterised in that** the pump (104) is a single-channel or multi-channel impeller pump or a vortex pump.

7. Separation device (100) according to one of claims 1 to 5, **characterised in that** the axis of the vortex is substantially merged with the axis of the pipe (110).

8. Separation device (100) according to one of claims 1 to 6, **characterised in that** the internal surface of the pipe (110) is smooth.

9. Separation device (100) according to one of claims 4 to 9, **characterised in that** the diameter of the pipe (110) is at least greater than a maximum distance separating two objects (122) when the objects are still connected together.

## Patentansprüche

1. Vorrichtung (100) zum Trennen von ursprünglich miteinander verbundenen Objekten (122), **gekennzeichnet durch** einen Behälter (102), wenigstens zwei Zuführungen (130), von denen jede in eine Leitung (110) mündet, und Erzeugungseinrichtungen (104) zum Erzeugen wenigstens eines Wasserwirbels in jeder Leitung (110).

2. Vorrichtung nach Anspruch 1, **dadurch gekennzeichnet, dass** die Zuführung (130) sich vereinigen und in die gleiche Leitung (110) münden.

3. Vorrichtung nach Anspruch 1 oder 2, **dadurch gekennzeichnet, dass** die Erzeugungseinrichtungen (104) und die Zuführungen (130) am einen Ende der Leitung (110) angeordnet sind, und das der erzeugte Wirbel die Objekte (122) zum zweiten Ende der Leitung (110) austreiben kann.

4. Vorrichtung nach einem der Ansprüche 1 oder 2, **dadurch gekennzeichnet, dass** die Erzeugungseinrichtungen (104) an einem ersten Ende der Leitung (110) und die Zuführungen (130) an einem zweiten Ende der Leitung (110) angeordnet sind, und dass der erzeugte Wirbel die Objekte (122) zum ersten Ende der Leitung (110) ansaugen kann.

5. Vorrichtung nach einem der vorhergehenden Ansprüche, **dadurch gekennzeichnet, dass** die Erzeugungseinrichtungen (104) wenigstens eine Pumpe umfassen.

6. Vorrichtung nach Anspruch 4, **dadurch gekennzeichnet, dass** die Pumpe (104) eine Einkanal-, Mehrkanalradpumpe oder eine Vortexpumpe ist.

7. Trennvorrichtung (100) nach einem der Ansprüche 1 bis 5, **dadurch gekennzeichnet, dass** die Wirbelachse im Wesentlichen mit der Achse der Leitung (110) übereinstimmt.

8. Trennvorrichtung (100) nach einem der Ansprüche 1 bis 6, **dadurch gekennzeichnet, dass** die Unterseite der Leitung (110) glatt ist.

9. Trennvorrichtung (100) nach einem der Ansprüche 4 bis 9, **dadurch gekennzeichnet, dass** der Durchmesser der Leitung (110) wenigstens größer als der maximale Abstand ist, der zwei Objekte (122) trennt, wenn diese Objekte noch miteinander verbunden sind.
